# FASCICULE DE BREVET EUROPEEN

(11) **EP 1 216 008 B1**
(45) Date de publication et mention de la délivrance du brevet: **16.03.2005**
(21) Numéro de dépôt: 00966250.3
(22) Date de dépôt: 02.10.2000
(51) Int. Cl.: A61C 1/18

(54) **PIECE A MAIN DENTAIRE COMPORTANT DES MOYENS MECANIQUES DE LIMITATION DE COUPLE**
ZAHNÄRZTLICHES HANDSTÜCK MIT MECHANISCHEN MITTELN ZUR DREHMOMENTBEGRENZUNG
DENTAL HANDPIECE COMPRISING TORQUE-LIMITING MEANS

(30) Priorité: 30.09.1999 FR 9912376
(43) Date de publication de la demande: 26.06.2002
(73) Titulaire: ANTHOGYR, F-74700 Sallanches (FR)
(72) Inventeur: RICHARD, Hervé, F-73590 Notre Dame de Bellecombe (FR)
(74) Mandataire: Poncet, Jean-François
(86) Numéro de dépôt international: PCT/FR2000/002723
(87) Numéro de publication internationale: WO 2001/022898

(56) Documents cités:
- DE-A- 2 726 325
- US-A- 3 852 884
- US-A- 5 584 689
- US-A- 5 924 864

## Description

La présente invention concerne les pièces à main utilisées dans les travaux dentaires, et permettant de porter un outil rotatif de travail dentaire et de l'entraîner selon un mouvement de rotation unidirectionnelle autour de son axe.

Pour une intervention en bouche, on utilise fréquemment des outils rotatifs de petite dimension, par exemple des limes de traitement des racines dentaires en forme de tige fine, en les tenant orientés selon une direction oblique ou perpendiculaire par rapport à la direction générale d'entrée en bouche. Pour cela, on utilise généralement une pièce à main dentaire angulée de type à contre angle, que le praticien peut accoupler mécaniquement à un moteur électrique ou pneumatique. Ces pièces à main à contre angles comportent un corps principal coaxial à l'axe de rotation du moteur d'entraînement et ayant un alésage longitudinal, puis une partie appelée col formant un angle de l'ordre de 15 à 30° par rapport au corps et ayant également un alésage longitudinal, et enfin une partie appelée tête qui est perpendiculaire ou sensiblement perpendiculaire au col et qui comprend un alésage transversal qui communique avec l'alésage longitudinal du col. Cette tête comprend un dispositif de maintien d'outil pour la fixation séparable d'un outil.

Un arbre porte-outil transversal est monté à rotation selon un axe transversal dans l'alésage transversal, et comprend un dispositif de maintien d'outil pour la fixation séparable d'un outil à l'arbre porte-outil. Un arbre d'entraînement est monté à rotation selon un axe longitudinal dans l'alésage longitudinal. Un couple d'engrenages à pignon monté en bout d'arbre d'entraînement et en prise sur une couronne montée sur l'arbre porte-outil assure la transmission d'un couple de rotation entre l'arbre d'entraînement et l'arbre porte-outil. A son autre extrémité, l'arbre d'entraînement est muni de moyens d'accouplement pour son entraînement en rotation par un moteur, généralement interchangeable. Le moteur tourne généralement à grande vitesse et est associé à un réducteur pour la transmission d'une vitesse plus lente appropriée dépendant de l'outil.

Ce type de pièces à main dentaire est actuellement fréquemment utilisé avec des limes flexibles, par exemple en alliage de nickel et de titane, qui doivent être entraînées en rotation unidirectionnelle à des vitesses relativement lentes de l'ordre de 3.00 tours/min, et qui présentent l'avantage d'être suffisamment flexibles pour suivre le profil longitudinal souvent incurvé des canaux dentaires.

Il arrive toutefois que l'outil engage ou se coince dans le canal dentaire. Cela risque de produire à la fois une dégradation intempestive du canal dentaire, et surtout une rupture de la lime. On comprend que l'enlèvement d'un tronçon de lime brisée coincé dans le canal dentaire très étroit est une opération délicate. Il sera souvent impossible de retirer ce tronçon et donc de terminer le traitement du canal.

Pour éviter ou réduire le risque de cassure des outils en cas d'engagement dans la matière de la dent, on a proposé d'entraîner le dispositif par un moteur électrique muni d'un limiteur de couple. Une telle solution est onéreuse, d'une part parce que le dispositif limiteur de couple est lui-même onéreux, et d'autre part parce qu'il ne s'adapte pas aux moteurs pré-existants que le praticien a déjà à sa disposition.

Dans le document DE 27 26 325, on a proposé de rapporter, entre la sortie du moteur d'entraînement et le câble flexible de transmission de mouvement vers la pièce à main, un dispositif de débrayage selon le préambule de la revendication 1, dans lequel l'arbre menant comporte une surface extérieure prismatique contre laquelle viennent porter des billes de couplage mobile dans des canaux radiaux de l'arbre mené. Le couple maximal transmis n'est pas réglable, de sorte que le dispositif n'est pas adapté pour une utilisation dans les travaux endodontiques, puisque le plus souvent il est nécessaire d'utiliser successivement plusieurs outils ayant des diamètres différents et admettant donc des couples maximum admissibles différents. En outre, le dispositif de débrayage est très éloigné de l'outil, et le dispositif présente une grande dispersion dans les couples maximum admissibles effectivement transmis à l'outil.

Le document US 5,924,864 propose d'incorporer un système de débrayage réglable dans le corps de pièce à main. Le système de débrayage comprend deux plateaux radiaux en appui frontal l'un sur l'autre, un premier plateau étant solidaire de l'arbre menant, un second plateau étant solidaire de l'arbre mené, les plateaux étant sollicités par un ressort de compression axiale dont la force est réglable par déplacement axial d'une bague de réglage périphérique. Les plateaux comportent sur leurs faces de contact des surfaces irrégulières qui frottent l'une contre l'autre. Il en résulte une usure progressive des plateaux au cours du fonctionnement dans le cas de débrayages. Les plateaux ont un diamètre relativement important qui interdit leur disposition dans le col de pièce à main qui est nécessairement étroit pour permettre l'introduction en bouche. Il est ainsi nécessaire de placer le dispositif de débrayage dans le corps de pièce à main, à l'écart de l'outil. Le réglage du couple maximum transmissible par manoeuvre de la bague périphérique nécessite d'utiliser la seconde main du praticien, la première main étant disposée sur le col de pièce à main pour le maintien de la pièce à main en bouche. Egalement, le dispositif de débrayage se trouve séparé de l'outil par une transmission mécanique à deux renvois d'angle successifs, ce qui affecte la précision de réglage du couple maximum limite transmissible.

### EXPOSE DE L'INVENTION

Le problème proposé par la présente invention est d'assurer une limitation automatique du couple d'entraînement d'un outil dentaire rotatif par d'autres moyens mécaniques simples et peu onéreux, incorporés dans la pièce à main elle-même et sans augmentation de son volume, de façon que le praticien puisse utiliser tous les types de moteurs et en particulier les moteurs qui sont déjà à sa disposition et qui sont dépourvus de limiteur de couple.

De préférence, l'invention vise en outre à assurer une précision et une reproductibilité satisfaisantes du couple limite maximum transmis par la pièce à main à l'outil, de façon que ce couple limite maximum soit adapté à l'outil dont l'usage est prévu, et que l'on puisse faire travailler l'outil dans ses meilleures conditions d'efficacité c'est à dire peu au-dessous de son couple limite maximum admissible avant rupture.

En pratique, l'ordre de grandeur du couple maximal limite dépend de l'outil, et, pour les limes flexibles actuellement utilisées, ce couple maximal est compris entre 0,3 et 5 N.cm environ.

Un autre objet de l'invention est d'assurer un fonctionnement efficace de l'outil, et donc un entraînement positif efficace et régulier de l'outil par la pièce à main tant que le couple maximum limite n'est pas atteint.

On cherche à réaliser les fonctions ci-dessus avec un nombre de pièces le plus réduit possible, afin de réduire le coût de fabrication et de montage.

Selon l'invention, on doit permettre en outre le réglage volontaire du couple maximum limite transmis par la pièce à main à l'outil, de façon que le praticien utilisant la pièce à main puisse adapter le couple maximum limite à différents outils qu'il peut utiliser successivement sur la même pièce à main, par exemple au cours d'un même traitement endodontique. Ainsi, la pièce à main permet de faire fonctionner les différents outils dans leurs meilleures conditions d'utilisation.

De préférence, les moyens de réglage doivent être directement accessibles par la main du praticien tenant la pièce à main, sans nécessiter l'usage de l'autre main ni perturber la tenue et le positionnement de la pièce à main.

De préférence, selon. l'invention, on cherche à limiter le couple d'entraînement de l'outil non seulement dans le sens direct de travail de l'outil pour un enlèvement de matière dentaire, mais également dans le sens inverse par exemple pour le dégagement de l'outil hors d'un canal dentaire. Les deux limites de couple maximum admissible peuvent alors, être différentes l'une de l'autre, selon le sens de rotation. On peut en effet admettre un couple limite plus important dans le sens de rotation inverse pour le dégagement de l'outil, et un couple limite moins important dans le sens de rotation direct pour le travail de l'outil.

Pour atteindre ces objets ainsi que d'autres, l'invention prévoit une pièce a main dentaire selon la revendication 1.

De préférence, la pièce à main dentaire selon l'invention comprend au moins deux éléments rotatifs de liaison montés coulissants radialement dans des canaux transversaux respectifs régulièrement répartis autour de l'axe longitudinal pour équilibrer les efforts radiaux des éléments rotatifs de liaison entre les portions de liaison mâle et femelle.

Comme élément rotatif de liaison, on peut utiliser des rouleaux ou galets cylindriques, des rouleaux galbés en forme de tonneau, ou plus simplement et avantageusement des billes de liaison.

On peut concevoir a priori que les éléments rotatifs de liaison soient logés dans des canaux transversaux respectifs soit de la portion de liaison femelle, soit de la portion de liaison mâle. On peut toutefois trouver avantage, notamment pour réduire l'encombrement et faciliter les réglages, à prévoir que le ou les éléments rotatifs de liaison sont montés coulissants radialement dans un canal transversal respectif de la portion de liaison mâle, et les cavités de liaison sont réparties annulairement sur la surface annulaire coaxiale de la portion de liaison femelle.

Selon un mode de réalisation, la pièce à main dentaire comprend des moyens de réglage de la force des moyens élastiques sollicitant le ou les éléments rotatifs de liaison. Selon une première possibilité, ces moyens de réglage constituent les moyens de réglage du couple maximum transmissible par les moyens de limitation de couple.

Plus avantageusement, les moyens de réglage de la force des moyens élastiques constituent seulement un moyen d'étalonnage que l'on règle en usine et qui n'est pas accessible au praticien, et on prévoit des moyens différents pour le réglage volontaire du couple maximum admissible par le praticien.

Selon une première possibilité. le ou les canaux transversaux sont orientés selon des directions radiales. Dans ce cas, le couple maximum transmissible est le même dans les deux sens de rotation.

De préférence, on peut prévoir que le ou les canaux transversaux sont orientés obliquement par rapport aux directions radiales. Dans ce cas, les couples maximum transmissibles sont différents selon le sens de rotation.

Selon une réalisation pratique, une pièce à main dentaire selon l'invention est telle que :
- la portion de liaison mâle est constituée par l'extrémité distale de l'arbre primaire,
- la portion de liaison femelle est une bague de liaison montée à recouvrement sur l'une et l'autre des extrémités adjacentes de l'arbre primaire et de l'arbre secondaire, et couplée à l'arbre secondaire par des moyens de blocage en rotation,
- l'extrémité distale de l'arbre primaire comporte des canaux transversaux guidant des billes de liaison,
- l'extrémité distale de l'arbre primaire comporte un alésage axial dans lequel débouchent les canaux transversaux,
- une pièce d'appui est montée à coulissement axial dans ledit alésage axial et comporte une partie tronconique en contact sur les billes de liaison pour les solliciter radialement vers l'extérieur,
- un ressort de compression est engagé axialement entre la pièce d'appui et une vis d'étalonnage elle-même engagée fonctionnellement dans un tronçon taraudé de l'alésage axial.

On peut concevoir a priori que la bague de liaison soit montée solidaire en rotation soit de l'arbre primaire, soit de l'arbre secondaire. On pourra toutefois préférer rendre la bague de liaison solidaire en rotation de l'arbre secondaire. Dans ce cas, une pièce à main dentaire est telle que :
- la bague de liaison est montée coulissante sur l'extrémité proximale de l'arbre secondaire, et comporte des cavités de liaison en forme de rainure longitudinale à profondeur variable suivant la direction longitudinale,
- la bague de liaison est libre en rotation et est solidaire en translation axiale par rapport à une bague de réglage elle-même montée à coulissement sur le corps de pièce à main pour être directement accessible par l'utilisateur.

Grâce à sa position dans la pièce à main elle-même, en bout de chaîne cinématique de transmission, le dispositif de débrayage mécanique selon l'invention agit sur des pièces en mouvement relativement lent, qui supportent donc des couples relativement élevés. La précision et la reproductibilité du couple limite ou couple de débrayage sont ainsi obtenues plus aisément. En outre, les frottements et pertes de rendement sont minimisés dans la portion de chaîne cinématique comprise entre le dispositif de débrayage et l'outil, de sorte que la valeur du couple maximum appliqué à l'outil est proche du couple de débrayage et n'est pas affectée par la transmission mécanique en aval.

En poursuivant cette même idée, pour améliorer encore la précision et la reproductibilité du couple limite ou couple de débrayage, on peut avantageusement prévoir une pièce à main dentaire comprenant un corps principal de pièce à main, un col de pièce à main et une tête de pièce à main, et placer les moyens de limitation de couple dans le col de pièce à main lui-même, c'est-à-dire au plus près de l'outil. Cela est rendu possible par la faible dimension des moyens particuliers de réglage du couple maximum transmissible selon l'invention.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :

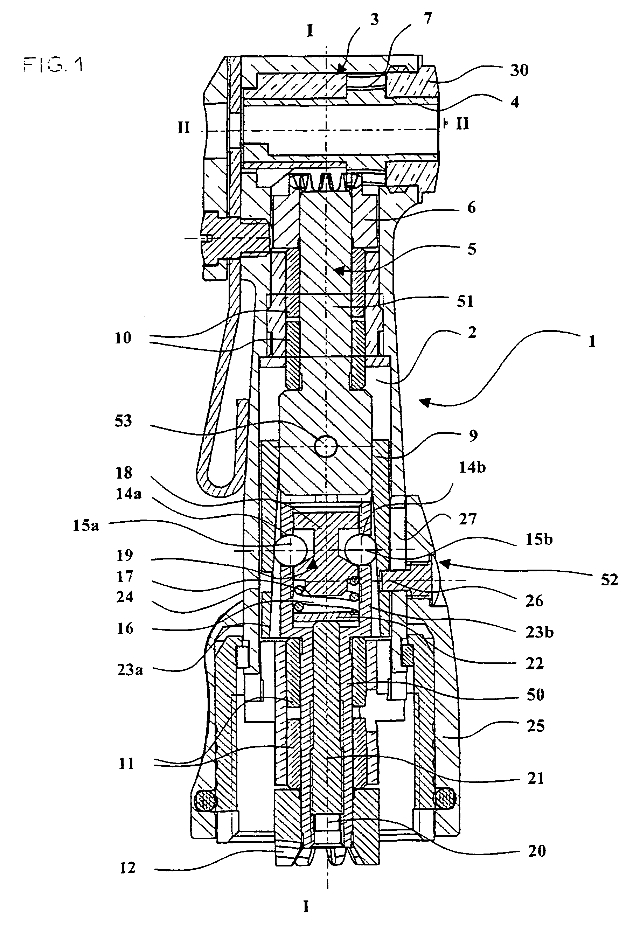

- la figure 1 est une vue en coupe longitudinale d'une pièce à main selon un mode de réalisation de la présente invention ;
- la figure 2 est une vue en perspective éclatée de la pièce à main de la figure 1 ;
- la figure 3 est une vue en coupe longitudinale du sous ensemble menant ;
- la figure 4 est une vue en coupe selon le plan B-B de la figure 5 ;
- la figure 5 est une vue extérieure de l'arbre primaire ;
- la figure 6 est une vue extérieure de droite de la bague de liaison coulissante se référant à la figure 7 ;
- la figure 7 est une demie coupe / demie vue extérieure de la bague de liaison coulissante ;
- la figure 8 est une vue en perspective de la bague de liaison coulissante ;
- la figure 9 est une vue en perspective du sous ensemble mené ; et
- la figure 10 est une vue en perspective de la bague de réglage.

### DESCRIPTION DES MODES DE REALISATION PREFERES

Dans tous les modes de réalisation illustrés sur les figures, une pièce à main dentaire selon l'invention comprend un col de pièce à main 1 dans lequel est prévu un alésage longitudinal 2 communiquant avec un alésage transversal 3 d'une tête de pièce à main 30 qui lui est solidaire. Un arbre porte outil 4 transversal est monté à rotation selon l'axe transversal II-II dans l'alésage transversal 3 de la tête de pièce à main 30, et comprend un dispositif de maintien d'outil pour la fixation séparable d'un outil sur l'arbre porte-outil 4.

Un arbre d'entraînement 5 est monté à rotation selon l'axe longitudinal I-I dans l'alésage longitudinal 2. Cet arbre d'entraînement 5 est composé d'un arbre primaire 50 et d'un arbre secondaire 51 coaxiaux et couplés à la suite l'un de l'autre par des moyens de limitation du couple maximum transmissible 52. L'arbre secondaire 51 est guidé par des paliers 10, et comporte à son extrémité distale proche de l'outil un pignon 6 qui coopère avec une denture 7 périphérique de l'arbre porte-outil 4. Entre les extrémités adjacentes de l'arbre primaire 50 et de l'arbre secondaire 51 est interposé le moyen d'accouplement mécanique à limitation de couple mécanique transmis 52. Ce dernier assure un débrayage lorsqu'un couple résistant appliqué sur un outil tenu par l'arbre porte-outil 4 prend une valeur supérieure à un seuil de couple déterminé.

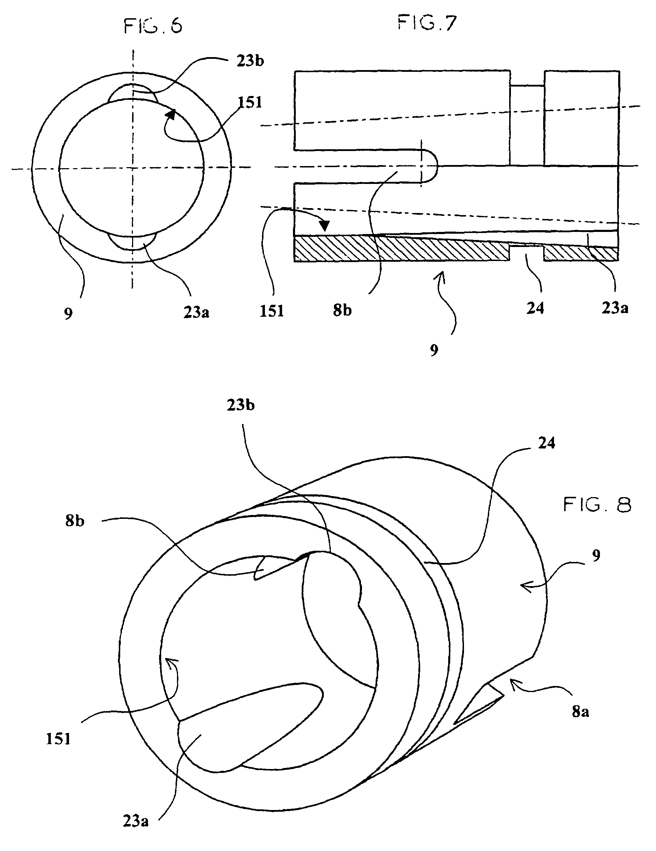

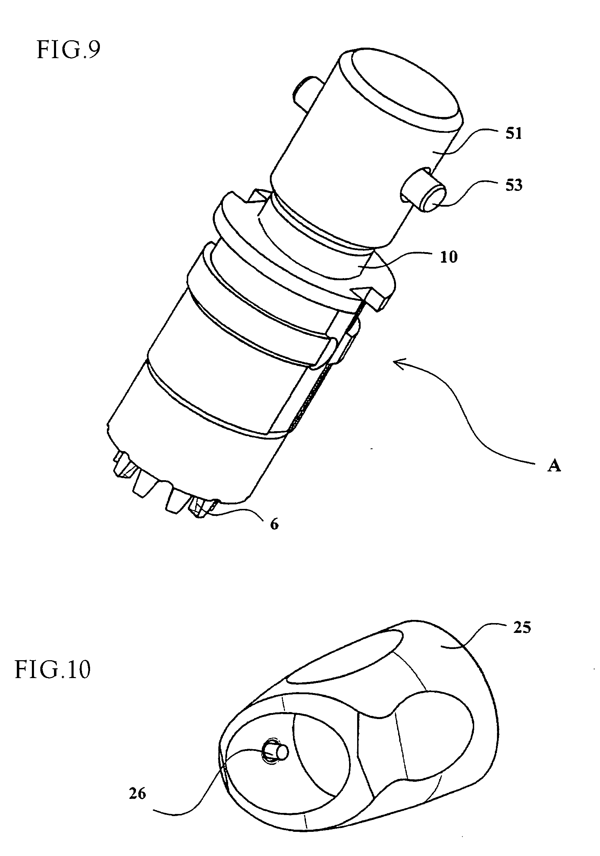

Dans la réalisation illustrée sur les figures, l'arbre secondaire 51 comporte à son autre extrémité proximale des parties en saillie, par exemple les extrémités d'une goupille 53 (figure 9), destinées à coopérer avec des fentes 8a et 8b (figures 7 et 8) d'une bague de liaison coulissante 9 pour l'entraînement positif en rotation de l'arbre secondaire 51 par cette bague tout en autorisant le coulissement longitudinal relatif de la bague 9. Cet arbre secondaire 51 ainsi que ses moyens de guidage forment un sous ensemble mené A illustré séparément sur la figure 9.

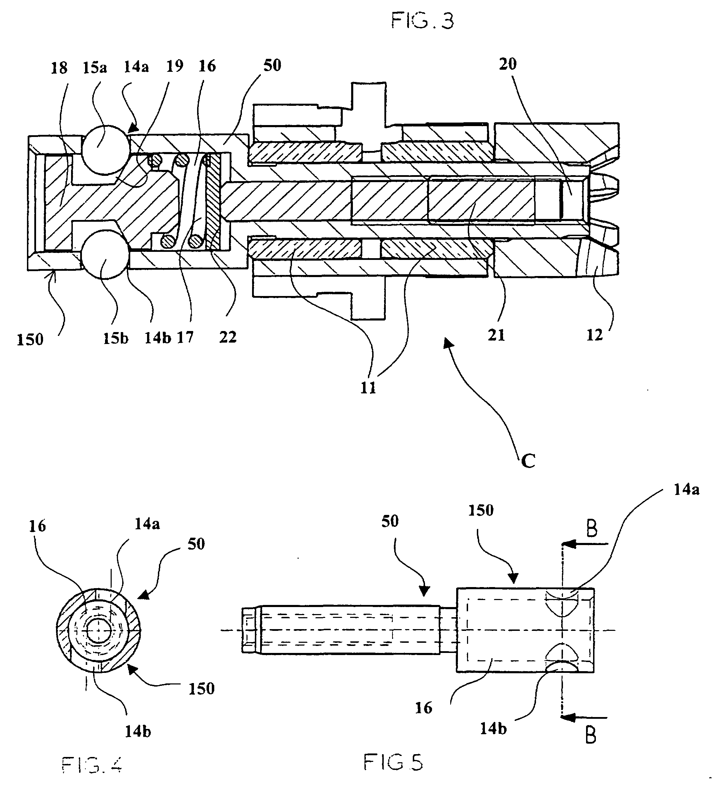

L'arbre primaire 50 est également monté à rotation selon l'axe longitudinal I-I dans l'alésage longitudinal 2 par l'intermédiaire de paliers 11. Cet arbre primaire 50 comporte à son extrémité proximale opposée à l'outil un pignon 12 destiné à coopérer avec un pignon d'entraînement situé en bout de chaîne cinématique du corps principal de pièce à main, non représenté sur les figures. Cet arbre primaire 50 comporte à son extrémité distale opposée deux canaux transversaux 14a et 14b diamétralement opposés et destinés à recevoir chacun une bille de liaison 15a ou 15b. Ces canaux transversaux 14a et 14b peuvent avantageusement être orientés obliquement par rapport aux directions radiales comme illustré sur la figure 4, afin de réaliser un seuil de débrayage différent selon le sens de rotation. Cette extrémité distale d'arbre primaire 50 comporte en outre un alésage axial 16 dans lequel débouchent les canaux transversaux 14a et 14b et destiné à recevoir un ressort 17 hélicoïdal de compression et une pièce d'appui 18 comportant une partie tronconique 19 destinée à appuyer sur les billes de liaison 15a et 15b pour les repousser radialement vers l'extérieur dans les canaux transversaux 14a et 14b respectifs. Cet arbre primaire 50 comporte en outre un alésage axial 20 comportant une portion taraudée et destiné à recevoir une vis d'étalonnage 21 qui appuie sur le ressort 17 par l'intermédiaire d'une rondelle 22. Cet ensemble d'éléments forme le sous ensemble menant C, illustré séparément sur la figure 3.

Entre l'arbre primaire 50 et l'arbre secondaire 51 est placée une bague de liaison coulissante 9 qui est montée en translation sur l'arbre secondaire 51. Cette bague de liaison coulissante 9 comporte en outre deux rainures intérieures longitudinales 23a et 23b diamétralement opposées, de section transversale en arc de cercle et de profondeur variable suivant la direction longitudinale. Ces deux rainures longitudinales 23a et 23b sont destinées à coopérer avec les billes de liaison 15a et 15b pour l'entraînement en rotation de l'arbre secondaire 51 par l'arbre primaire 50, et constituent des cavités de liaison. Ces rainures intérieures longitudinales 23a et 23b peuvent avantageusement être réalisées par perçage de deux trous cylindriques convergents dont le diamètre est égal ou légèrement supérieur au diamètre des billes de liaison 15a et 15b. Ces deux perçages sont réalisés avant l'alésage central de la bague de liaison coulissante 9. Cette bague de liaison coulissante 9 comporte en outre une gorge externe 24.

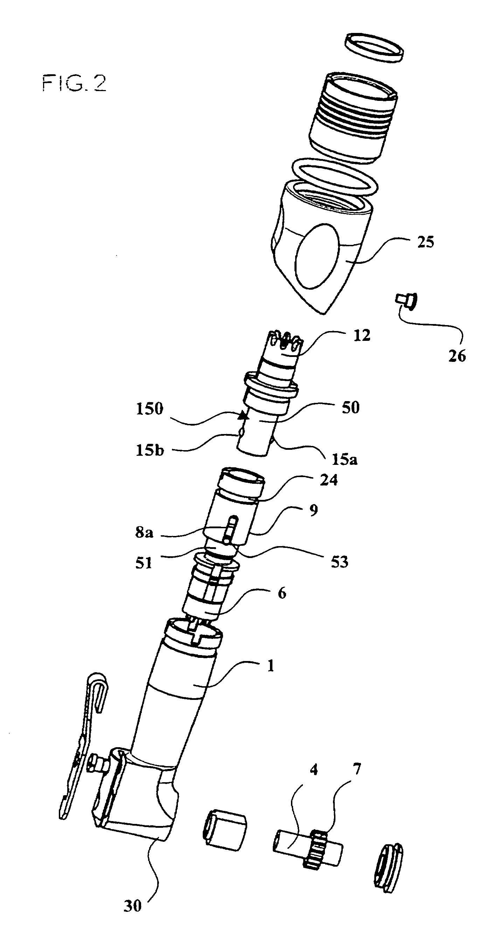

Dans la réalisation illustrée, la portion de liaison mâle est constituée par l'extrémité distale de l'arbre primaire 50, avec sa surface annulaire coaxiale extérieure 150 (figures 2 et 3). La portion de liaison femelle est constituée par la bague de liaison 9, solidaire en rotation de l'arbre secondaire 51. Sa surface annulaire coaxiale intérieure 151 (figures 6 à 8) vient à recouvrement de la surface annulaire coaxiale extérieure 150 de la portion de liaison mâle constituée par l'arbre primaire 50. Les cavités 23a et 23b sont réparties sur la surface annulaire coaxiale intérieure 151 de la bague de liaison 9.

Une bague de réglage 25 est montée à coulissement axial sur le col de pièce à main 1, pour être directement accessible par l'utilisateur. La bague de réglage 25 comporte une saillie intérieure 26 qui traverse une lumière longitudinale 27 du col de pièce à main 1 et s'engage dans la gorge 24 pour le déplacement axial de la bague de liaison coulissante 9 tout en autorisant sa libre rotation avec l'arbre secondaire 51.

En cours de fonctionnement, si le couple résistant appliqué par l'outil à l'arbre secondaire 51 devient égal ou supérieur au seuil maximum admissible, les billes de liaison 15a, 15b subissent une réaction des rainures intérieures 23a, 23b de la bague de liaison 9 qui tend à les rapprocher, en opposition au ressort 17. Les billes 15a, 15b peuvent alors se dégager et sortir des rainures intérieures 23a et 23b en autorisant la rotation relative des arbres primaire 50 et secondaire 51 l'un par rapport à l'autre. Les billes 15a et 15b atteignent ensuite les autres rainures intérieures 23b et 23a respectivement en produisant un cliquetis, et elles peuvent en sortir si le couple reste suffisant. Cela produit un débrayage qui limite le couple transmis et évite la rupture de l'outil engagé dans l'arbre porte-outil.

La bague de réglage 25 permet de déplacer longitudinalement la bague de liaison 9, et de faire ainsi varier le seuil de couple maximal transmissible, par le fait que les billes de liaison 15a, 15b s'engagent dans des parties plus ou moins profondes des rainures longitudinales 23a et 23b. Plus la partie de rainure longitudinale 23a et 23b est profonde, moins elle repousse la bille de liaison 15a ou 15b vers l'axe I-I pour un couple d'entraînement donné, et plus elle produit donc une valeur élevée du couple maximal admissible avant débrayage.

### Mode opératoire:

L'utilisateur met en place l'outil dans la tête 30 de la pièce à main qui a préalablement été connectée au moteur d'entraînement.

L'utilisateur déplace la bague de réglage 25 jusqu'à la position longitudinale désirée en fonction du type d'outil, réglant ainsi le couple maximum transmissible.

L'utilisateur met en marche le moteur d'entraînement dans le sens normal et effectue le traitement. Si le couple de coincement de l'outil devient supérieur au couple maximum transmissible préalablement réglé, alors l'outil s'arrête automatiquement de tourner et l'utilisateur en est informé car il entend alors un cliquetis qui correspond au passage des billes 15a et 15b successivement dans les rainures intérieures longitudinales 23a et 23b de la bague de liaison 9.

Si l'utilisateur peut retirer l'outil de la zone à traiter par simple traction axiale, celui-ci se remet alors automatiquement en mouvement, et l'utilisateur peut continuer le traitement.

S'il n'est pas possible de retirer l'outil, par exemple lors d'un coincement important, l'utilisateur inverse le sens de rotation du moteur d'entraînement et peut alors retirer l'outil, puisque celui-ci, entraîné selon un couple inverse plus important, se dégage du canal dentaire.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de limitation du couple maximum transmissible pour l'entraînement en rotation continue d'un outil dentaire dans une pièce à main dentaire, comportant :
- un arbre d'entraînement (5) monté rotatif dans un alésage longitudinal (2) et composé d'un arbre primaire (50) et d'un arbre secondaire (51) coaxiaux et couplés à la suite l'un de l'autre par des moyens de limitation du couple maximum transmissible (52) munis de moyens de réglage dudit couple maximum transmissible,
- une portion de liaison mâle, solidaire en rotation du premier des arbres primaire (50) et secondaire (51), et comportant une surface annulaire coaxiale extérieure (150),
- une portion de liaison femelle (9), solidaire en rotation du second des arbres primaire (50) et secondaire (51), et comportant une surface annulaire coaxiale intérieure (151) venant à recouvrement de la surface annulaire coaxiale extérieure (150) de la portion de liaison mâle,
- une série de 'cavités de liaison (23a, 23b) réparties annulairement sur la surface annulaire coaxiale (151) de la première des portions de liaison mâle ou femelle,
- au moins un élément rotatif de liaison (15a, 15b) à axe de rotation parallèle, monté coulissant radialement dans un canal transversal (14a, 14b) de la seconde des portions de liaison mâle ou femelle, sollicité par des moyens élastiques (17) vers la surface annulaire coaxiale (151) de la première des portions de liaison mâle ou femelle pour s'engager partiellement dans lesdites cavités de liaison (23a, 23b) en restant guidé dans ledit canal transversal (14a, 14b),
**caractérisé en ce que** :
- le dispositif de limitation du couple est intégré dans une pièce à main dentaire,
- les moyens de limitation de couple comprennent des moyens (24-26) accessibles par l'utilisateur pour le réglage volontaire du couple maximum transmissible,
- les cavités de liaison (23a, 23b) sont des rainures longitudinales de section transversale en arc de cercle et de profondeur variable suivant la direction longitudinale,
- on prévoit des moyens de réglage de position longitudinale relative (24-26) accessibles à l'utilisateur, pour régler la position longitudinale relative de la portion de liaison mâle (50) dans la portion de liaison femelle (9),
de sorte que le ou les éléments rotatifs de liaison (15a, 15b) s'engagent dans des portions plus ou moins profondes des cavités de liaison (23a, 23b) en fonction de la position longitudinale relative choisie, ce qui détermine le couple maximum transmissible.

2. Pièce à main dentaire selon la revendication 1 **caractérisée en ce qu'**elle comprend au moins deux éléments rotatifs de liaison (15a, 15b) montés coulissants radialement dans des canaux transversaux respectifs (14a, 14b) régulièrement répartis autour de l'axe longitudinal (I-I) pour équilibrer les efforts radiaux des éléments rotatifs de liaison entre les portions de liaison mâle et femelle.

3. Pièce à main dentaire selon l'une des revendications 1 ou 2 **caractérisée en ce que** le ou les éléments rotatifs de liaison sont des billes de liaison (15a, 15b).

4. Pièce à main dentaire selon l'une quelconque des revendications 1 à 3 **caractérisée en ce que** le ou les éléments rotatifs de liaison (15a, 15b) sont montés coulissants radialement dans un canal transversal respectif (14a, 14b) de la portion de liaison mâle (50), et les cavités de liaison (23a, 23b) sont réparties annulairement sur la surface annulaire coaxiale (151) de la portion de liaison femelle (9).

5. Pièce à main dentaire selon l'une quelconque des revendications 1 à 4 **caractérisée en ce qu'**elle comprend des moyens de réglage (20-22) de la force des moyens élastiques (17) sollicitant le ou les éléments rotatifs de liaison (15a, 15b).

6. Pièce à main dentaire selon l'une quelconque des revendications 1 à 5 **caractérisée en ce que** le ou les canaux transversaux (14a, 14b) sont orientés selon des directions radiales.

7. Pièce à main dentaire selon l'une quelconque des revendications 1 à 5 **caractérisée en ce que** le ou les canaux transversaux (14a, 14b) sont orientés obliquement par rapport aux directions radiales.

8. Pièce à main dentaire selon l'une quelconque des revendications 1 à 7 **caractérisée en ce que** :
- la portion de liaison mâle est constituée par l'extrémité distale de l'arbre primaire (50),
- la portion de liaison femelle est une bague de liaison (9) montée à recouvrement sur l'une et l'autre des extrémités adjacentes de l'arbre primaire (50) et de l'arbre secondaire (51), et couplée à l'arbre secondaire par des moyens de blocage en rotation (8a, 8b, 53),
- l'extrémité distale de l'arbre primaire (50) comporte des canaux transversaux (14a, 14b) guidant des billes de liaison (15a, 15b),
- l'extrémité distale de l'arbre primaire (50) comporte un alésage axial (16) dans lequel débouchent les canaux transversaux (14a, 14b),
- une pièce d'appui (18) est montée à coulissement axial dans ledit alésage axial (16) et comporte une partie tronconique (19) en contact sur les billes de liaison (15a, 15b) pour les solliciter radialement vers l'extérieur,
- un ressort de compression (17) est engagé axialement entre la pièce d'appui (18) et une vis d'étalonnage (21) elle-même engagée fonctionnellement dans un tronçon taraudé de l'alésage axial (20).

9. Pièce à main dentaire selon la revendication 8 **caractérisée en ce que** :
- la bague de liaison (9) est montée coulissante sur l'extrémité proximale de l'arbre secondaire (51), et comporte des cavités (23a, 23b) de liaison en forme de rainure longitudinale à profondeur variable suivant la direction longitudinale,
- la bague de liaison (9) est libre en rotation et est solidaire en translation axiale par rapport à une bague de réglage (25) elle-même montée à coulissement sur le corps de pièce à main pour être directement accessible par l'utilisateur.

10. Pièce à main dentaire selon l'une quelconque des revendications 1 à 9, comprenant un corps principal de pièce à main, un col (1) de pièce à main et une tête (30) de pièce à main,
**caractérisée en ce que** les moyens de limitation de couple (52) sont logés dans le col (1) de la pièce à main.

## Patentansprüche

1. Anordnung zur Begrenzung des maximalen Drehmomentes zum kontinuierlichen Antreiben eines zahnärztlichen Werkzeuges in einem zahnärztlichen Handstück, mit:
- einer Antriebswelle (5), die drehbar in einer Längsbohrung (2) angeordnet ist und aus einer primären Welle (50) und einer koaxialen sekundären Welle (51) zusammengesetzt ist, die aufeinanderfolgend durch Mittel (52) zur Begrenzung des maximal übertragbaren Drehmomentes gekoppelt sind, welches mit Mitteln zum Einstellen des genannten maximal übertragbaren Drehmomentes versehen ist,
- einem männlichen Verbindungsteil, das sich zusammen mit der ersten der primären (50) und sekundären (51) Wellen dreht und eine ringförmige koaxiale äußere Fläche (150) aufweist,
- einem weiblichen Verbindungsteil (9), das sich mit der zweiten der primären (50) und senkundären (51) Wellen dreht und eine ringförmige koaxiale innere Fläche (151) aufweist, die mit der ringförmigen koaxialen äußeren Fläche (150) des männlichen Verbindungsteiles in Überdeckung kommt,
- einer Reihe von Verbindungshohlräumen (23a, 23b), die ringförmig auf der ringförmigen koaxialen Fläche (151) des ersten der männlichen oder weiblichen Verbindungsteile verteilt ist,
- mindestens einem drehbaren Verbindungselement (15a, 15b) mit paralleler Rotationsachse, das in einem Querkanal (14a, 14b) des zweiten der männlichen oder weiblichen Verbindungsteile radial verschiebbar angebracht ist und durch elastische Mittel (17) in Richtung zur ringförmigen koaxialen Fläche (151) des ersten der männlichen oder weiblichen Verbindungsteile belastet ist, um teilweise in die genannten Verbindungshohlräume (23a, 23b) einzugreifen, wobei es in dem genannten Querkanal (14a, 14b) geführt bleibt,
**dadurch gekennzeichnet, daß**
- die Anordnung zur Drehmomentbegrenzung in ein zahnärztliches Handstück integriert ist,
- die Mittel zur Drehmomentbegrenzung Mittel (24-26) aufweisen, die dem Benutzer zur willkürlichen Einstellung des maximal übertragbaren Drehmomentes zugänglich sind,
- die Verbindungshohlräume (23a, 23b) längs verlaufende Nuten mit kreisbogenförmigem Querschnitt und in Längsrichtung veränderlicher Tiefe sind,
- Mittel (24-26) zum Einstellen der relativen Position in Längsrichtung vorgesehen sind, die dem Benutzer zugänglich sind, um die relative Position in Längsrichtung des männlichen Verbindungsteiles (50) im weiblichen Verbindungsteil (9) einzustellen,
derart, daß das drehbare Verbindungselement oder die drehbaren Verbindungselemente (15a, 15b) in mehr oder weniger tiefe Teile der Verbindungshohlräume (23a, 23b) in Abhängigkeit von der gewählten relativen Längsposition eingreifen, die das maximal zulässige Drehmoment bestimmt.

2. Zahnärztliches Handstück nach Anspruch 1, **dadurch gekennzeichnet,**
**daß** es mindestens zwei drehbare Verbindungselemente (15a, 15b) enthält, die radial verschiebbar in den entsprechenden Querkanälen (14a, 14b) gleichmäßig versetzt um die Längsachse (I-I) angeordnet sind, um die radialen Kräfte der drehbaren Verbindungselemente zwischen den männlichen und weiblichen Verbindungsteilen auszugleichen.

3. Zahnärztliches Handstück nach einem der Ansprüche 1 oder 2, **dadurch gekennzeichnet,**
**daß** die drehbaren Verbindungselemente Verbindungskugeln (15a, 15b) sind.

4. Zahnärztliches Handstück nach irgendeinem der Ansprüche 1 bis 3, **dadurch gekennzeichnet,**
**daß** das drehbare Verbindungselement oder die drehbaren Verbindungselemente (15a, 15b) radial verschieblich in einem entsprechenden Querkanal (14a, 14b) des männlichen Verbindungsteiles (50) angeordnet sind und daß die Verbindungshohlräume (23a, 23b) ringförmig auf der ringförmigen koaxialen Fläche (151) des weiblichen Verbindungsteiles (9) verteilt angeordnet sind.

5. Zahnärztliches Handstück nach irgendeinem der Ansprüche 1 bis 4, **dadurch gekennzeichnet,**
**daß** es Einstellmittel (20-22) für die Kraft der elastischen Mittel (17) aufweist, die das drehbare Verbindungselement oder die drehbaren Verbindungselemente (15a, 15b) vorspannen.

6. Zahnärztliches Handstück nach irgendeinem der Ansprüche 1 bis 5, **dadurch gekennzeichnet,**
**daß** der Querkanal oder die Querkanäle (14a, 14b) gemäß radialen Richtungen ausgerichtet sind.

7. Zahnärztliches Handstück nach irgendeinem der Ansprüche 1 bis 5, **dadurch gekennzeichnet,**
**daß** der Querkanal oder die Querkanäle (14a, 14b) schräg bezüglich den radialen Richtungen ausgerichtet sind.

8. Zahnärztliches Handstück nach irgendeinem der Ansprüche 1 bis 7, **dadurch gekennzeichnet,**
**daß**:
- das männliche Verbindungsteil durch ein distales Ende der primären Welle (50) gebildet ist,
- das weibliche Verbindungsteil ein Verbindungsring (9) ist, der zur Überdeckung des einen und des anderen benachbarten Endes der primären Welle (50) und der sekundären Welle (51) angeordnet ist und durch Mittel (8a, 8b, 53) zum Blockieren einer Drehung mit der sekundären Welle gekoppelt ist,
- das distale Ende der primären Welle (50) Querkanäle (14a, 14b) trägt, die die Verbindungskugeln (15a, 15b) führen,
- das distale Ende der primären Welle (50) eine axiale Bohrung (16) aufweist, in die die Querkanäle (14a, 14b) münden,
- ein Anschlagteil (18) axial verschieblich in der genannten axialen Bohrung (16) angeordnet ist und einen kegelstumpfförmigen Teil (19) in Kontakt mit den Verbindungskugeln (15a, 15b) trägt, um sie radial nach außen vorzuspannen,
- eine Druckfeder (17) axial zwischen dem Anschlagteil (18) und einer Markierungsschraube (21) angeordnet ist, die ihrerseits funktionell in einen Gewindeabschnitt der axialen Bohrung (20) eingreift.

9. Zahnärztliches Handstück nach Anspruch 8, **dadurch gekennzeichnet,**
**daß**:
- der Verbindungsring (9) verschieblich auf dem proximalen Ende der sekundären Welle (51) angeordnet ist und Verbindungshohlräume (23a, 23b) in Form von Längsnuten mit veränderlicher Tiefe folgend der Längsrichtung aufweist,
- der Verbindungsring (9) frei drehbar ist und in axialer Verschiebung bezüglich eines Einstellringes (25) gemeinsam verschieblich ist, wobei letzterer verschieblich auf dem Körper des Handstückes angeordnet ist, um für den Benutzer direkt zugänglich zu sein.

10. Zahnärztliches Handstück nach irgendeinem der Ansprüche 1 bis 9, mit einem Hauptkörper des Handstückes, einem Kragen (1) des Handstückes und einem Kopf (30) des Handstückes, **dadurch gekennzeichnet,**
**daß** die Mittel (52) zur Begrenzung des Drehmomentes auf dem Kragen (1) des Handstückes angeordnet sind.

## Claims

1. Device for limiting maximum torque for driving continuous rotation of a dental tool in a dental handpiece, said device including :
- a drive shaft (5) mounted to rotate in a longitudinal bore (2) and made up of a primary shaft (50) and a secondary shaft (51) which are coaxial, coupled together in series by torque limiter means (52) for limiting the maximum torque that can be transmitted and provided with means for adjusting said maximum torque that can be transmitted,
- a male coupling portion constrained to rotate with the first shaft of the pair of shafts comprising the primary shaft (50) and secondary shaft (51), and having a coaxial annular outside surface (150),
- a female coupling portion (9) constrained to rotate with the second shaft of the pair of shafts comprising the primary shaft (50) and the secondary shaft (51), and having a coaxial annular inside surface (151) overlapping the coaxial annular outside surface (150) of the male coupling portion,
- a series of coupling cavities (23a, 23b) distributed annularly over the coaxial annular surface (151) of the first coupling portion of the pair of coupling portions comprising the male and female coupling portions,
- at least one rotary coupling member (15a, 15b) with a parallel rotation axis, mounted to slide radially in a transverse passage (14a, 14b) of the second coupling portion of the pair of coupling portions comprising the male and female coupling portions, and spring-loaded by spring means (17) toward the coaxial annular surface (151) of the first coupling portion of the pair of coupling portions comprising the male and female coupling portions so as to be partially engaged in said coupling cavities (23a, 23b) whilst remaining guided in said transverse passage (14a, 14b),
**characterized in that** :
- the device for limiting maximum torque is integrated in a dental handpiece,
- the torque limiter means include means (24-26) accessible by the user for voluntary adjustment of the maximum torque that can be transmitted,
- the coupling cavities (23a, 23b) are longitudinal grooves with a circular arc-shaped cross section and a depth varying in the longitudinal direction,
- relative longitudinal position adjustment means (24-26) accessible to the user are provided for adjusting the relative longitudinal position of the male coupling portion (50) in the female coupling portion (9),
so that the rotary coupling member(s) (15a, 15b) engage in deeper or shallower portions of the coupling cavities (23a, 23b) as a function of the chosen relative longitudinal position, which determines the maximum torque that can be transmitted.

2. Dental handpiece according to claim 1, **characterized in that** it includes at least two rotary coupling members (15a, 15b) mounted to slide radially in respective transverse passages (14a, 14b) regularly distributed around the longitudinal axis (I-I) to balance the radial forces of the rotary coupling members between the male and female coupling portions.

3. Dental handpiece according to either claim 1 or claim 2, **characterized in that** the rotary coupling member(s) are coupling balls (15a, 15b).

4. Dental handpiece according to any of claims 1 to 3, **characterized in that** the rotary coupling member(s) (15a, 15b) are mounted to slide radially in a respective transverse passage (14a, 14b) in the male coupling portion (50), and the coupling cavities (23a, 23b) are distributed annularly over the coaxial annular surface (151) of the female coupling portion (9).

5. Dental handpiece according to any of claims 1 to 4, **characterized in that** it includes means (20-22) for adjusting the force of the spring means (17) spring-loading the rotary coupling member(s) (15a, 15b).

6. Dental handpiece according to any of claims 1 to 5, **characterized in that** the transverse channel(s) (14a, 14b) are oriented in radial directions.

7. Dental handpiece according to any of claims 1 to 5, **characterized in that** the transverse passage(s) (14a, 14b) are oriented obliquely to the radial directions.

8. Dental handpiece according to any of claims 1 to 7, **characterized in that** :
- the male coupling portion is constituted by the distal end of the primary shaft (50),
- the female coupling portion is a coupling ring (9) mounted to overlap the adjacent ends of the primary shaft (50) and the secondary shaft (51), and coupled to the secondary shaft by rotation-preventing means (8a, 8b, 53),
- the distal end of the primary shaft (50) includes transverse passages (14a, 14b) for guiding coupling balls (15a, 15b),
- the distal end of the primary shaft (50) includes an axial bore (16) into which the transverse passages (14a, 14b) open,
- a bearing portion (18) is mounted to slide axially in said axial bore (16) and has a frustoconical part (19) in contact with the coupling balls (15a, 15b) to urge them radially outward,
- a compression spring (17) is engaged axially between the bearing member (18) and a calibration screw (21) itself functionally engaged in a screwthreaded section of the axial bore (20).

9. Dental handpiece according to claim 8, **characterized in that** :
- the coupling ring (9) is slidably mounted on the proximal end of the secondary shaft (51), and includes coupling cavities (23a, 23b) in the form of longitudinal grooves whose depth varies in the longitudinal direction,
- the coupling ring (9) is freely rotatable and is constrained to move in axial translation with an adjuster ring (25) itself slidably mounted on the handpiece body to be directly accessible to the user.

10. Dental handpiece according to any of claims 1 to 9, including a main handpiece body, a handpiece neck
(1) and a handpiece head (30), **characterized in that** the torque-limiter means (52) are housed in the neck (1) of the handpiece.
